Europäisches Patentamt

(19) European Patent Office

Office européen des brevets

(11) Publication number: 0 260 742
A1

## (12) EUROPEAN PATENT APPLICATION

(21) Application number: 87201690.2

(51) Int. Cl.4: G02B 6/26

(22) Date of filing: 07.09.87

(30) Priority: 10.09.86 NL 8602277

(43) Date of publication of application:
23.03.88 Bulletin 88/12

(84) Designated Contracting States:
DE FR GB IT NL SE

(71) Applicant: N.V. Philips' Gloeilampenfabrieken
Groenewoudseweg 1
NL-5621 BA Eindhoven(NL)

(72) Inventor: Khoe, Giok Djan
c/o INT. OCTROOIBUREAU B.V. Prof.
Holstlaan 6
NL-5656 AA Eindhoven(NL)

(74) Representative: Beckers, Hubertus Franciscus
Maria et al
INTERNATIONAAL OCTROOIBUREAU B.V.
Prof. Holstlaan 6
NL-5656 AA Eindhoven(NL)

(54) Optical transmission fibre having a tapered end portion provided with a lens.

(57) A monomode optical transmission fibre (1) is described an end portion (5) of which has a tapered core (2) and cladding (3), which end portion is provided with a lens (7) having a spherical outer surface (8). A transparent layer of a cured synthetic material (9) whose outer profile (10) is adapted to the specific circumstances under which the transmission fibre is to be used is provided on the lens substrate (7) by means of a replica technique.

FIG. 1

# Optical transmission fibre having a tapered end portion provided with a lens.

The invention relates to a monomode optical transmission fibre having an end portion comprising a tapered core and cladding and being provided with a lens having a spherical outer surface. The invention also relates to a method of manufacturing such a transmission fibre.

A transmission fibre and a method of this type are known from European Patent Application No. 0,114,439. As is described in this Application, monomode optical transmission fibres having a tapered core and cladding, as compared with transmission fibres having a straight and flat end portion, have a considerably higher coupling efficiency. The coupling efficiency is to be understood to mean the quotient of the radiation intensity received from a source by the transmission fibre and the total radiation intensity emitted by this source.

The coupling efficiency can be still further increased by providing the tapered end portion of the monomode transmission fibre with a lens. As is described in the European Patent Application No. 0,114,439, this lens can be arranged by immersing the tapered end portion of the fibre in a liquid transparent material such as glass, withdrawing the tapered end portion from the liquid material and allowing the material which adheres to the fibre end to solidify to a stable lens shape. The numerical aperture of the fibre end is increased by the lens arranged on the end portion of the transmission fibre. The increased coupling efficiency thereby obtained is particularly important if the fibre end is arranged opposite a radiation source such as a diode laser.

The drop of material adhering to the end portion of the fibre after it has been withdrawn from the immersion bath and hence the ultimately obtained lens on this end portion has a spherical outer surface. This shape is determined by the surface tension in the liquid drop. In a number of cases the spherical shape is not the ideal shape for the lens, notably if the radiation beam presented to the transmission fibre has a non-spherical wavefront or if the lens exhibits spherical aberrations.

It is an object of the present invention to provide a novel class of optical transmission fibres having a tapered end portion and being provided with a lens in which the shape of the lens can be adapted to the circumstances and which can be manufactured at low cost. The optical transmission fibre according to the invention is characterized in that a transparent layer of a cured synthetic material having a varying thickness is provided on the lens so that the outer surface of this layer has a profile deviating from the spherical shape.

This profile may have any desired shape, on the condition that the negative of this profile can be provided with sufficiently great accuracy in a mould which is used for shaping the still viscous material. In the course of time Applicant has gained great experience in the manufacture of objective lenses with diameters in the order of millimetres and consist of a single lens element having one or two aspherical refractive surfaces which are used in apparatus for reading and/or inscribing optical record carriers now generally known under the names of "Compact Disc" or "CD"-playings and "Laservision"-players. In this manufacturing method use is made of a so-called replica process, starting from a preform or lens substrate which is usually made of glass. A layer of a transparent synthetic material which has been sufficiently softened is provided on one or on both refractive lens surfaces. This layer is pressed against a mould having the desired surface profile and is cured, whereafter the mould is removed and the lens becomes available. The required moulds which must comply with very stringent requirements of accuracy in shape and roughness can be manufactured by means of a high-precision lathe which has also been developed by Applicant. It has been found that when using the lens replica technology, which has been developed for another purpose, for optical transmission fibres having tapered end portions, these fibres can be given a high coupling efficiency in a relatively simple way. It has also been found that Applicant is capable of manufacturing the specific moulds for replica lenses on transmission fibres.

It is to be noted that an optical transmission fibre having an end portion which is provided with a lens consisting of a cured epoxy resin is known from German Patent Application No. 2,535,161 laid open to public inspection. This lens is obtained by immersing the end portion of the fibre in a bath of viscous epoxy resin and, after the fibre has been withdrawn from the bath, by heating the resin so that it cures. Prior to starting the curing operation the soft drop of resin can be pressed into a mould so that the lens acquires an adapted shape. However, the known fibre has a straight end portion instead of a tapered end portion. It must be concluded from the values given for the lens radius, 70 to 120 micrometers, that the known fibre with the lens is a multimode and not a monomode transmission fibre. The German Patent Application No. 2,535,161 therefore does not have for its object to increase the coupling efficiency of a monomode transmission fibre, which object is considered to be very intricate and for which a combination of a tapered fibre end and a replica lens is a low-cost and successful solution.

As compared with the lens described in the German Patent Application No. 2,535,161 the lens according to the present invention has the advantage that the preform or the lens substrate largely determining the lens power consists of a material, for example glass, which is substantially not affected by variations of ambient parameters such as temperature and humidity. The synthetic material layer is relatively thin so that variations of the ambient parameters which do affect the optical properties of this layer can only slightly affect the optical properties of the total lens. The lens which according to the German Patent Application No. 2,535,161 is arranged on the fibre end is considerably larger and consists completely of a synthetic material so that its shape and optical properties depend on the ambient parameters to a greater extent.

The transparent layer which in accordance with the invention is provided on the lens substrate may consist of various synthetic materials, provided that these synthetic materials can be sufficiently softened and then cured. Curing may take place under the influence of heat, cold or after a lapse of time.

However, a preferred embodiment of the transmission fibre according to the invention is further characterized in that the layer of cured material is a material which is cured under the influence of ultraviolet radiation.

The advantage of this material is that curing takes place rapidly and that the lens substrate and the tapered end portion of the fibre are not affected during this curing treatment.

The optical transmission fibre may be further characterized in that the layer of cured material has an aspherical outer surface.

This layer may then be corrective for aberrations of the lens substrate or for asphericities in the wavefront of the radiation beam presented.

If the tapered end portion of the transmission fibre provided with a lens must be arranged opposite a diode laser whose wavefront is astigmatic, the layer of cured material may have a non-rotationally symmetrical outer surface in accordance with a further characteristic feature. This outer surface may then have, for example, a cylindrical shape.

The outer surface of the cured layer is preferably anti-reflective.

A second feature of the present invention relates to a method of manufacturing the above-described optical transmission fibre. This method starts from a transmission fibre with a tapered core and cladding on which a lens having a spherical outer surface is arranged. This transmission fibre may be manufactured, for example, in accordance with the methods described in European Patent Applications Nos. 0,114,439 and 0,191,197. The method according to the invention is characterized in that the lens thus obtained is used as a lens substrate on which a synthetic material in a sufficiently soft condition is provided, whereafter a mould having a specific profile is pressed against it, the synthetic material is cured and the mould is removed, whereafter the lens on the fibre end portion has acquired an outer profile which is the reverse of the mould profile.

This method is preferably further characterized in that the soft synthetic material is cured by irradiation with ultraviolet radiation.

In accordance with a further characteristic feature of the method a mould is preferably used which is transparent to ultraviolet radiation. The layer of synthetic material can then be irradiated via the mould and hence evenly so that the curing treatment proceeds evenly.

The method may be further characterized in that a mould is used which comprises a first portion accommodating the profile and a second portion which is secured to the first portion and which is used to guide the end portion of the transmission fibre. By means of such a mould the layer of synthetic material can be centred correctly with respect to the fibre core.

The invention will now be described in greater detail with reference to the accompanying drawings in which

Figure 1 shows an optical transmission fibre according to the invention,

Figures 2a and 2b show two mutually perpendicular cross-sections of a replica lens in a first embodiment of the transmission fibre according to the invention,

Figure 3 is a cross-sectional view of a replica lens in a second embodiment of this transmission fibre,

Figure 4 shows a first possibility of obtaining a tapered end portion provided with a lens,

Figures 5, 6 and 7 show the different process steps of a second method of obtaining a tapered fibre end portion provided with a lens,

Figure 8 shows how a synthetic material layer having a special profile is provided on the lens substrate and

Figure 9 shows an embodiment of the mould used for this purpose.

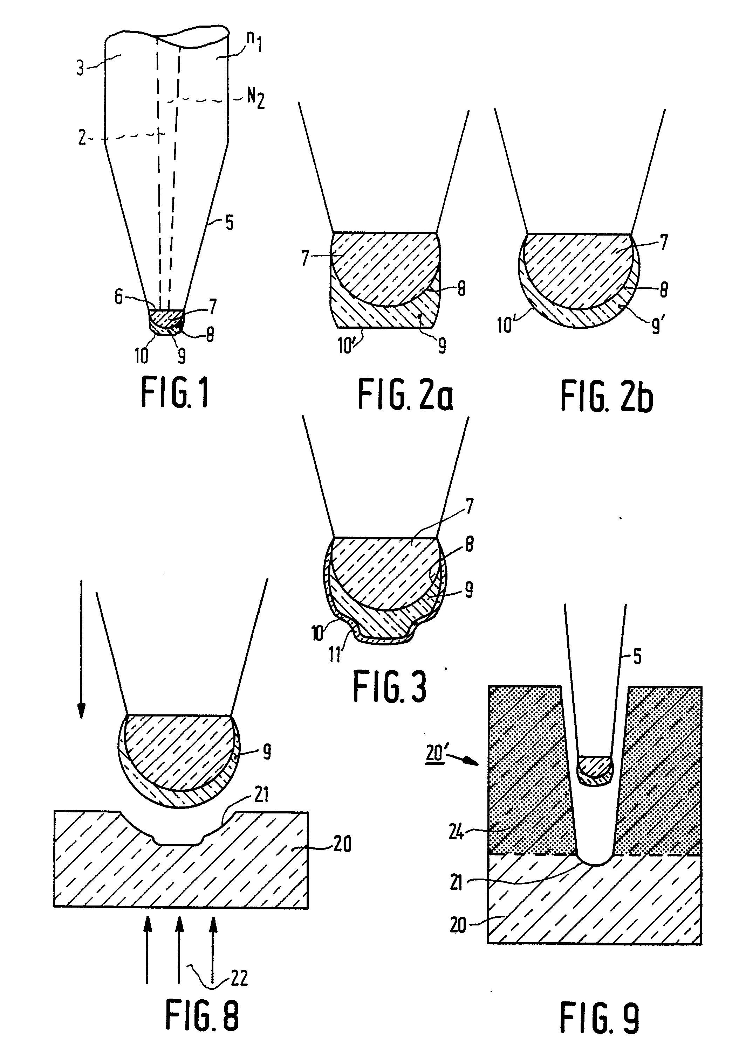

The transmission fibre 1 shown in Figure 1 comprises a core 2 and a cladding 3. The refractive index $n_2$ of the core material is slightly different from that ($n_1$) of the cladding material so that most part of the light entering the fibre core is guided through the core via the mechanism of total reflection from the core-to-cladding interfaces. The refractive index $n_2$ of the cladding material is, for example, 1.47 if this material is quartz and the refractive index $n_1$ of the core material is, for example, 0.3% higher. The transmission fibre described here is a monomode fibre, which means that only radiation of a specific mode can propagate in the fibre core. In such a fibre the core diameter is substantially smaller than the cladding diameter. For example, the core diameter is approximately 7 micrometres and the cladding diameter is approximately 125 micrometres.

The greater part of the transmission fibre is straight. The end portion 5 is, however, tapered. To increase the coupling efficiency a lens 7 having a spherical outer surface 8 is arranged on the fibre end portion 5. This lens preferably consists of glass, for example of the type SF59, BK1, BK3 or TIK1. The lens converges the radiation entering through its outer surface and originating, for example from a radiation source on the end face 6 of the fibre 1.

According to the invention a transparent layer of a synthetic material 9 having a non-uniform thickness is provided on the spherical outer surface 8 of the lens 7. The outer surface 10 of this layer has, for example an aspherical profile. The shape of this surface depends on the circumstances under which the transmission fibre is to be used.

If the transmission fibre must receive and transmit radiation which originates from a diode laser emitting an astigmatic wavefront, the layer 9 has a non-rotationally symmetrical surface. The diode laser referred to has a strip-shaped radiation-emitting surface and the radiation beam emitted by this surface has a wavefront whose radius of curvature in a plane parallel to the strip is different from the radius of curvature in a plane perpendicular to the strip. By using a non-rotationally symmetrical lens element having different powers in two mutually perpendicular directions, for example a cylinder lens, the laser wavefront can be adapted to a rotationally symmetrical optical system which is a transmission fibre. Figures 2a and 2b show two mutually perpendicular cross-sections of a lens 7 having a cylindrical layer 9'.

. If the lens 7 is found to exhibit aberrations or if the wavefront of the laser beam which must be received exhibits aberrations, a layer 9 having a rotationally symmetrical aspherical outer surface can be provided on the lens 7. An aspherical surface is understood to mean a surface whose basic shape is spherical but which comprises portions deviating from the basic shape in order to reduce spherical aberrations. Figure 3 is a cross-sectional view of a lens substrate 7 with a synthetic material layer 9 having an aspherical outer surface 10.

It is to be noted that the thickness of the synthetic material layers and the gradients in the outer surface are shown greatly exaggerated in Figures 2a, 2b and 3. Notably the aspherical layer is proportionally considerably thinner and more spherical in practice.

The synthetic material layer may have a relatively high refractive index which is otherwise equal as much as possible to that of the material of the lens substrate 7. In order to prevent reflections at the transition between air and synthetic material layer, an anti-reflection coating 11 may be deposited on the synthetic material layer. Another possibility is to render the outer surface 10 of the lens anti-reflective by giving the surface a sub-micron relief structure whose differences in height and the distances between the tops are of the order of several tens to several hundred nanometres. Such an anti-reflecting relief structure is described in "Optica Acta", 1982, Vol. 29, No. 7, pages 993-1009.

The method of manufacturing the optical transmission fibre will now be described in greater detail. For the sake of completeness, the manner in which the tapered fibre end portion 5 with the lens substrate 7 is obtained will be described first.

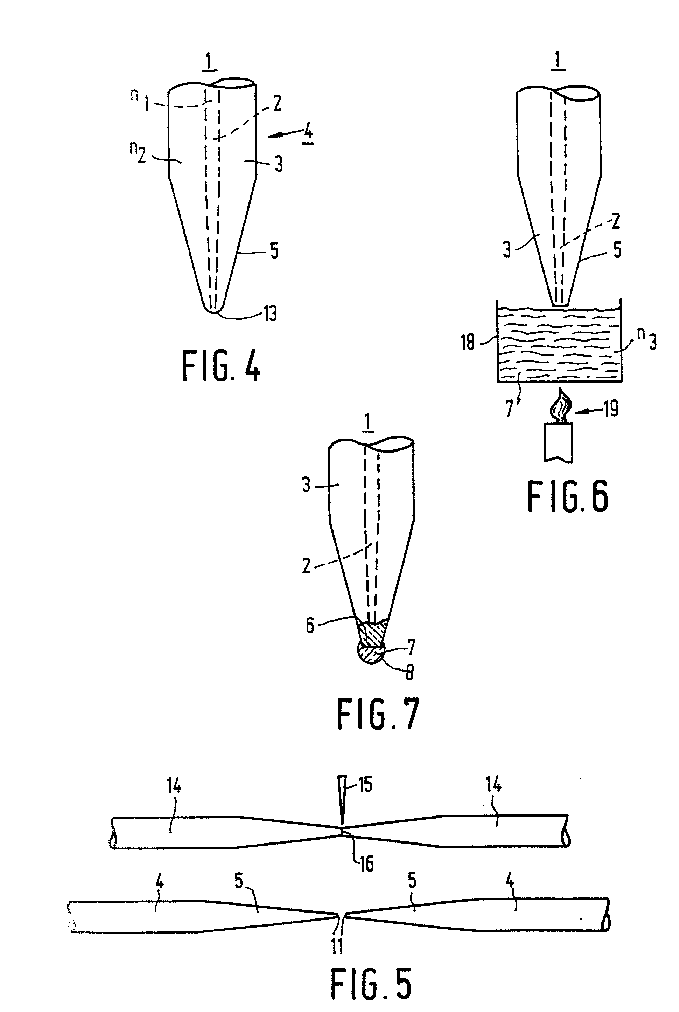

A straight transmission fibre is used for this method. This fibre can be stretched in an arc discharge until it breaks. The two halves of this fibre then have acquired a tapered end portion with a rounded top 13. One of these halves is shown in Figure 4. The shape of the tapered end portion and the radius of the rounded top 13 are determined by the speed of stretching. The rounded top has a radius of, for example, 12.5 micrometres. This top may exhibit a lens function.

In a method which is preferably used for obtaining a tapered transmission fibre with a lens shape a straight transmission fibre is used again which is first stretched over a specific distance in an arc. In the fibre 14 thus obtained a scratch 16 is made by means of a scriber 15 of a circle-cutting apparatus as is shown in the upper part of Figure 5. Subsequently the fibre is stretched further until it breaks, the fracture surface being a flat surface at the location of the scratch. Thus, two tapered fibres 4 with flat end faces are obtained as is shown in the lower part of Figure 5.

When the straight transmission fibre is stretched, is it possible to pull at both ends of the fibre. However, it has been bound that a better result is obtained if one end of the straight fibre is immobilised and only the other end of the fibre is pulled at. Of the fibre portions obtained after fracture of the straight fibre the immobilised portion has a substantially shorter tapered end portion, for example 125 micrometers than the fibre portion which has been pulled at. The transmission fibre with a shorter tapered end portion has a higher coupling efficiency than a transmission fibre with a longer tapered end portion.

The tapered end portion with a flat end face obtained by means of the methods such as described above can be immersed in a soft material 7' as is shown in Figure 6. This material is preferably a glass which has been melted in a crucible 18 as is diagrammatically designated by the flame 19. As is described in European Patent Application No. 0,114,439 this glass may have a refractive index $n_3$ which is considerably higher than that of the fibre core material and it may be, for example of the type SF59 with a refractive index $n_3 = 1.9$.

As is described in European Patent Application No. 0,191,197 a glass is preferably chosen which is suitably soft at a temperature which is lower than the softening point of the fibre core or cladding. This glass may be, for example of the type BK1, BK3, TIK1 or SF59.

A type of glass must be chosen whose refractive index does not decrease substantially during softening and subsequent cooling.

When the fibre end portion is withdrawn from the crucible, a part of the material 7' will adhere to the fibre. As a result of the surface tension this amount of material having a specific viscosity will adopt a specific drop shape, designated 7 in Figure 7. The dimensions and the shape of this drop can be influenced by the immersion depth and the temperature of the material in the crucible 18.

After the fibre end portion with the drop 7 has been withdrawn from the crucible, the drop is allowed to cool. In this way a lens is formed on the flat end face 6 of the transmission fibre.

Another possiblity of giving the tapered end portion with flat end face of the fibre a lens shape, as is shown in the lower part of Figure 5, is to melt the top of this end portion in an arc and subsequently allow it to cool. This top then acquires a rounded shape.

According to the invention a layer of a transparent synthetic material 9, for example a material which can be polymerized by means of ultraviolet radiation is provided on the lens 7, hereinafter referred to as lens substrate, and obtained by means of one of the above-mentioned methods. The synthetic material must be sufficiently soft so that it can still be deformed. The lens substrate with the synthetic material layer is subsequently pressed into a mould 20 which has a profile 21 which is the reverse of the desired, for example, aspherical or cylindrical profile. The synthetic material is subsequently cured, for example by means of ultraviolet radiation 22 and the mould is removed, thereby releasing the desired lens without further operations being required.

Synthetic materials other than those which can be polymerized by means of ultraviolet radiation may be used alternatively, such as materials which cure under the influence of heat, cold or after a time lapse.

When using a synthetic material which can be polymerized by means of ultraviolet radiation, a mould such as a quartz mould which is transparent to ultraviolet radiation is preferably used. The synthetic material can then be exposed through the mould as is shown in Figure 8 so that the synthetic material cures evenly. The ultraviolet radiation for curing may also be guided via the fibre 1 and the lens substrate 7 to the synthetic material layer.

The mould is preferably provided with a means for guiding the end portion of the fibre as is shown in Figure 9. When moving the end portion 5 towards the mould, the fibre is then automatically centred correctly with respect to the profile 21 in the mould. The mould 20' shown in Figure 9 may comprise two portions, the portion 20 which accommodates the profile to be transferred and the guiding portion 24 which is adhered to the portion 20, for example by means of an adhesive.

In addition to the desired lens profile 21, a submicron relief structure or moth-eye structure may be provided in the mould. The outer surface of the replica lens can then be given both the desired profile and be rendered anti-reflective in one process step so that additional process steps can be dispensed with. The replica lens may of course also be provided with a single or multi-layer anti-reflection coating in the conventional manner.

## Claims

1. A monomode optical transmission fibre having an end portion comprising a tapered core and cladding and being provided with a lens having a spherical outer surface, characterized in that a transparent layer of a cured synthetic material having a varying thickness is provided on the lens so that the outer surface of this layer has a profile deviating from the spherical shape.

2. A monomode optical transmission fibre as claimed in Claim 1, characterized in that the layer of cured material is a material which is cured under the influence of ultraviolet radiation.

3. A monomode optical transmission fibre as claimed in Claim 1 or 2, characterized in that the layer of cured material has an aspherical outer surface.

4. A monomode optical transmission fibre as claimed in Claim 1 or 2, characterized in that the layer of cured material has a non-rotationally symmetrical outer surface.

5. A monomode optical transmission fibre as claimed in Claim 4, characterized in that the layer of cured material has a cylindrical outer surface.

6. A monomode optical transmission fibre as claimed in Claim 1, 2, 3, 4 or 5, characterized in that the outer surface of the layer of cured material is anti-reflective.

7. A method of manufacturing a monomode optical transmission fibre as claimed in Claim 1, using a transmission fibre with a tepered core and cladding on which a lens having a spherical outer surface is arranged, characterized in that this lens is used as a lens substrate on which a synthetic material in a sufficiently soft condition is provided, whereafter a mould having a specific profile is pressed against it, the synthetic material is cured and the mould is removed, whereafter the lens on the fibre end portion has acquired an outer profile which is the reverse of the mould profile.

8. A method as claimed in Claim 7, characterized in that the soft synthetic material is cured by irradiation with ultraviolet radiation.

9. A method as claimed in Claim 8, characterized in that a mould is used which is transparent to ultraviolet radiation.

10. A method as claimed in Claim 7, 8 or 9, characterized in that a mould is used which comprises a first portion accommodating the profile and a second portion secured to the first portion and which is used to guide the end portion of the transmission fibre.

FIG.1

FIG. 2a

FIG. 2b

FIG. 3

FIG. 8

FIG. 9

1-II-PHN 11865

FIG. 4

FIG. 6

FIG. 7

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | EP-A-0 114 439 (PHILIPS) * Abstract; figures * | 1 | G 02 B 6/26 |
| Y | EP-A-0 156 430 (PHILIPS) * Page 7, lines 20-38; page 8, lines 1-20 * | 1 | |
| A | | 2,3,7,8,9 | |
| A | DE-A-3 407 413 (S.E.L.) * Abstract; figure * | 1 | |
| A | US-A-4 338 352 (P.D. BEAR) * Claims; figures * | 1 | |
| A | DE-A-3 134 508 (LICENTIA) * Claims * | 1 | |

TECHNICAL FIELDS SEARCHED (Int. Cl.4)

G 02 B

The present search report has been drawn up for all claims

| Place of search | Date of completion of the search | Examiner |
|---|---|---|
| THE HAGUE | 15-12-1987 | PFAHLER R. |